# EUROPÄISCHE PATENTSCHRIFT

(11) **EP 2 203 327 B1**
(45) Veröffentlichungstag und Bekanntmachung des Hinweises auf die Patenterteilung: **06.11.2013**
(21) Anmeldenummer: 08804019.1
(22) Anmeldetag: 11.09.2008
(51) Int. Cl.: B60N 2/235

(54) **VORRICHTUNG ZUM VER- UND FESTSTELLEN EINER RÜCKENLEHNE EINES FAHRZEUGSITZES**
DEVICE FOR ADJUSTING AND FIXING A BACKREST OF A VEHICLE SEAT
DISPOSITIF POUR RÉGLER ET BLOQUER LE DOSSIER D'UN SIÈGE DE VÉHICULE

(30) Priorität: 17.09.2007 DE 102007044311
(43) Veröffentlichungstag der Anmeldung: 07.07.2010
(73) Patentinhaber: Brose Fahrzeugteile GmbH & Co. KG, Coburg, 96450 Coburg (DE)
(72) Erfinder: STEFFEN, Oliver, 96450 Coburg (DE); FASSBENDER, Frank, 96450 Coburg (DE); KRÜGER, Frieder, 96450 Coburg (DE)
(74) Vertreter: Ninnemann, Detlef
(86) Internationale Anmeldenummer: PCT/EP2008/062054
(87) Internationale Veröffentlichungsnummer: WO 2009/037184

(56) Entgegenhaltungen:
- EP-A- 1 279 553
- DE-A1- 10 142 295
- DE-A1- 19 737 637

## Beschreibung

Die Erfindung betrifft eine Vorrichtung zum Ver- und Feststellen einer Rückenlehne eines Fahrzeugsitzes, insbesondere nach dem Oberbegriff des Anspruchs 1.

Aus der gattungsgemäßen DE 101 42 295 A1 ist eine Sitzlehnenvorrichtung bekannt, die ein an der Sitzfläche befestigtes Beschlagteil und ein an der Sitzlehne befestigtes und schwenkbar mit dem an der Sitzfläche befestigten Beschlagteil verbundenes Beschlagteil mit Innenverzahnungsabschnitten aufweist. In dem an der Sitzfläche befestigten Beschlagteil sind drei Klauen mit einem Außenverzahnungsabschnitt zwischen jeweils zwei Führungen in radialer Richtung gleitend angeordnet und zwischen einer Zahneingriffsposition, in der die Innenverzahnungsabschnitte in Verzahnungseingriff mit den Außenverzahnungsabschnitten der Klauen stehen, und einer Position aufgehobenen Zahnungseingriffs bewegbar, in der die Innenverzahnungsabschnitte außer Verzahnungseingriff mit den Außenverzahnungsabschnitten der Klauen sind. Eine mit einer Drehwelle verbundene Nockenscheibe ist bei einer Drehung der Drehwelle in Eingriff oder außer Eingriff mit einem Vorsprung der Klauen, die dementsprechend mit ihren Außenverzahnungsabschnitten in Eingriff und außer Eingriff mit den Innenverzahnungsabschnitten des an der Sitzlehne befestigten Beschlagteils sind.

Zum Verstellen der Sitzlehne wird ein mit der Drehwelle verbundener Betätigungshebel verschwenkt und durch die Drehung der Nockenwelle werden die Außenverzahnungsabschnitte der Klauen außer Eingriff mit den Innenverzahnungsabschnitten des an der Sitzlehne befestigten Beschlagteils gebracht, so dass die Sitzlehne nicht mehr über die mit dem an der Sitzfläche befestigten Beschlagteil verbundenen Klauen und Führungen in dem mit der Sitzfläche verbundenen Beschlagteil festgelegt ist. Nach dem Verstellen der Sitzlehne wird die Nockenscheibe durch die Rückstellkraft einer Spiralfeder wieder in eine Position gebracht, in der die Außenverzahnungsabschnitte der Klauen wieder in Eingriff mit den Innenverzahnungsabschnitten des an der Sitzlehne befestigten Beschlagteils gelangen.

Da bei der bekannten Sitzlehnenvorrichtung die Arretierung der Neigungseinstellung der Sitzlehne über die in dem an der Sitzfläche befestigten Beschlagteil angeordneten Führungen und die dazwischen gleitend angeordneten Klauen erfolgt, wirkt sich ein in der Gleitführung der Klauen vorhandenes Spiel als Bewegungsspiel der Sitzlehne aus, wobei sich ein auch nur geringes Spiel der an der Schwenkachse der Rückenlehne angeordneten Beschlagteile bei entsprechender Länge der Sitzlehne als großes Bewegungsspiel am oberen Ende der Sitzlehne bemerkbar macht, bei unbesetztem Fahrzeugsitz zu Klappergeräuschen und bei besetztem Fahrzeugsitz zu unerwünschten Bewegungen der Rückenlehne führt.

Ein weiteres Problem besteht darin, dass zur Arretierung der Neigungseinstellung der Sitzlehne der Kraftfluss von dem an der Sitzlehne befestigten Beschlagteil über die Klauen und Führungen auf das an der Sitzfläche befestigte Beschlagteil verläuft, was die Ausbildung entsprechend stabiler Führungen für die Klauen erfordert. Unter den hohen mechanischen Belastungen der Beschlagteile und Verstellteile arbeiten sich die miteinander in Eingriff stehenden Flächen der Klauen in die Führungen ein, was zu zusätzlichem Spiel führt.

Der vorliegenden Erfindung liegt die Aufgabenstellung zugrunde, eine Vorrichtung zum Ver- und Feststellen einer Rückenlehne eines Fahrzeugsitzes ohne Spiel zwischen den mit dem Sitzuntergestell und der Rückenlehne verbundenen Beschlagteilen auch über die gesamte Dauer des Gebrauchs bei konstruktiv einfachem Aufbau der Ver- und Feststellvorrichtung zu schaffen.

Diese Aufgabenstellung wird mit den Merkmalen des Anspruchs 1 gelöst.

Die erfindungsgemäße Lösung stellt eine Vorrichtung zum Ver- und Feststellen einer über eine Verstellachse mit einem Sitzuntergestell verbundenen Rückenlehne eines Fahrzeugsitzes ohne Spiel zwischen den mit dem Sitzuntergestell und der Rückenlehne verbundenen Beschlagteilen bei konstruktiv einfachem Aufbau der Ver- und Feststellvorrichtung über die gesamte Gebrauchsdauer sicher, da zur Arretierung der Neigungseinstellung der Rückenlehne ein direkter Kraftfluss zwischen den mit dem Sitzuntergestell einerseits und der Rückenlehne des Fahrzeugsitzes andererseits verbundenen Beschlagteilen durch die formschlüssige Koppelung der Innenverzahnungen der Hohlradscheiben über die Außenverzahnung des mindestens einen Sperrelements erfolgt und dadurch die Führungen des Sperrelements nicht oder nur geringfügig belastet werden.

Durch den direkten Kraftfluss von dem an der Rückenlehne befestigten Beschlagteil zu dem am Sitzuntergestell befestigten Beschlagteil werden während der Gebrauchsdauer der Ver- und Feststelleinrichtung auftretende Abnutzungs- und Setzeffekte ausgeglichen.

Unter der Bezeichnung "Hohlradscheibe" ist ein Hohlrad zu verstehen, dessen eine Seite scheibenförmig mit einer zentralen Lageröffnung abgedeckt ist, so dass sich eine Tellerform ergibt. In alternativer Ausführung wird unter einer Hohlradscheibe auch ein mit einem Sitzuntergestell verbundenes Beschlagteil mit innen verzahntem Hohlrad und einer Aufnahme für die Führungen des mindestens einen Sperrelements sowie ein koaxial zu dem mit dem Sitzuntergestell verbundenem Beschlagteil angeordnetes, mit der Rückenlehne des Fahrzeugsitzes verbundenes Beschlagteil mit einem innen verzahnten Hohlrad verstanden.

Da die Hohlradscheiben mit Innenverzahnungen mit unterschiedlichen Werkzeugen gefertigt werden, treten unterschiedliche Durchmesser der Hohlradscheiben bzw. der Innenverzahnungen und Unterschiede in der Verzahnungsgeometrie auf, so dass kein völlig spielfreier Ausgleich der fertigungsbedingten Toleranzen möglich ist.

Bei hoher Fertigungsgenauigkeit, d. h. geringen fertigungsbedingten Toleranzen kann ein Sperrelement mit einer als Vollverzahnung ausgebildeten Außenverzahnung mit einer Zahnbreite eingesetzt werden, die die Innenverzahnungen der ersten und zweiten Hohlradscheibe im Wesentlichen überdeckt.

Beim Einsatz eines Sperrelements mit einer voll verzahnten Außenverzahnung, die im Wesentlichen über die gesamte Breite in die Innenverzahnungen der ersten und zweiten Hohlradscheibe eingreift, können aber fertigungsbedingte Toleranzen bezüglich der Durchmesser der Hohlradscheiben und der Verzahnungsgeometrien nicht ausgeglichen werden.

Bei geringerer Fertigungsgenauigkeit, d. h. größeren zugelassenen fertigungsbedingten Toleranzen, kann ein Sperrelement mit einer Außenverzahnung eingesetzt werden, die in Umfangsrichtung in zwei zueinander beabstandete Bereiche unterteilt ist, in denen eine erste Teilverzahnung der Innenverzahnung der ersten Hohlradscheibe und eine axial zur ersten Teilverzahnung versetzte zweite Teilverzahnung der Innenverzahnung der zweiten Hohlradscheibe zugeordnet ist, wobei das Sperrelement um eine zwischen beiden Bereichen liegende Achse kipp- oder schwenkbar ist.

Durch die axial und radial versetzten Teilverzahnungsbereiche greift nur jeweils ein Teilverzahnungsbereich der Außenverzahnung des Sperrelements in die Innenverzahnung jeweils einer Hohlradscheibe ein und das Sperrelement schwenkt bzw. kippt solange um den Schwenk- bzw. Kipppunkt hin und her, bis die Teilverzahnungsbereiche in die ihnen zugeordnete Innenverzahnung der Hohlradscheiben eingreifen. Durch die Kippbewegung wird erreicht, dass die Teilverzahnungsbereiche hinreichend tief in die Innenverzahnungen der Hohlradscheiben eingreifen und damit Toleranzen eliminieren.

Zur Optimierung der Kraftübertragung der Ver- und Feststellvorrichtung insbesondere unter Berücksichtigung von Crashkräften ist eine Kombination von voll verzahnten Sperrelementen, die mit einer großen Verzahnungsfläche ihrer voll verzahnten Außenverzahnung in die Innenverzahnungen der Hohlradscheiben eingreifen, mit teilverzahnten Sperrelementen optimal, die eine geringere Verzahnungsfläche aufweisen, dafür aber Fertigungstoleranzen ausgleichend wirken.

Die Verwendung eines um einen geringen Winkel kipp- oder schwenkbar gelagerten Sperrelements, dessen Außenverzahnung in Umfangsrichtung in zwei zueinander beabstandete Teilbereiche unterteilt ist, in denen mit der Innenverzahnung der ersten Hohlradscheibe und der Innenverzahnung der zweiten Hohlradscheibe in Eingriff stehende Teilverzahnungen angeordnet sind, gewährleistet einen Toleranzausgleich, da das Kippen oder Schwenken des Sperrelements solange erfolgt, bis ein vollständiger Eingriff der Teilverzahnungen des Sperrelements in die Innenverzahnungen der Hohlradscheiben erreicht ist.

Werden mehrere, am Umfang der Innenverzahnungen der Hohlradscheiben verteilt angeordnete Sperrelemente vorgesehen, so hängt die Art der Lagerung der Hohlradscheiben davon ab, ob Sperrelemente mit Vollverzahnung und/oder Teilverzahnung eingesetzt werden. Werden ausschließlich voll verzahnte oder sowohl voll verzahnte als auch teilverzahnte Sperrelemente eingesetzt, so ist eine schwimmende Lagerung der Hohlradscheiben erforderlich, da andernfalls der Eingriff der Außenverzahnung des mindestens einen voll verzahnten Sperrelements in die Innenverzahnungen der beiden Hohlradscheiben nicht sichergestellt werden kann. Die schwimmende Lagerung der Hohlradscheiben gestattet ein gleichmäßiges Einrasten der Außenverzahnung des mindestens einen Sperrelements in die Innenverzahnungen der Hohlradscheiben.

Werden dagegen ausschließlich teilverzahnte Sperrelemente eingesetzt, so ist es möglich, auf eine schwimmende Lagerung der beiden Hohlradscheiben zu verzichten und dementsprechend die Hohlradscheiben kostengünstig mit großen zusätzlichen Toleranzen zu fertigen, da ein Ausgleich von fertigungsbedingten Toleranzen durch das bzw. die kipp- bzw. schwenkbare(n) teilverzahnte(n) Sperrelement(e) erfolgt.

Ein kipp- oder schwenkbares Sperrelement mit einer Teilverzahnung ermöglicht beim Eingreifen der Teilverzahnungsbereiche des Sperrelements in die Innenverzahnungen der Hohlradscheiben einen Toleranzausgleich hinsichtlich der Verzahnungsgeometrie und/oder der Durchmesser der Hohlradscheiben und/oder eines Achsversatzes der Hohlradscheiben, so dass Verzahnungstoleranzen der Innenverzahnungen der Hohlradscheiben zueinander durch kipp- bzw. schwenkbare Sperrelemente mit Teilverzahnung ausgeglichen werden und dadurch die Ver- und Feststellvorrichtung spielfrei gehalten wird.

Bei einer Anordnung von mehreren am Umfang der Innenverzahnungen der Hohlradscheiben versetzt angeordneten Sperrelementen können entweder mindestens zwei in Umfangsrichtung der Innenverzahnungen der Hohlradscheiben versetzt zueinander angeordnete Sperrelemente mit übereinstimmend als Vollverzahnung oder als Teilverzahnung ausgebildeten Außenverzahnungen oder mindestens zwei in Umfangsrichtung der Innenverzahnungen der Hohlradscheiben angeordnete Sperrelemente mit unterschiedlichen, als Voll- und Teilverzahnungen ausgebildeten Außenverzahnungen eingesetzt werden.

Werden mindestens zwei in Umfangsrichtung der Innenverzahnungen der Hohlradscheiben angeordnete Sperrelemente mit unterschiedlichen, als Voll- und Teilverzahnungen ausgebildeten Außenverzahnungen eingesetzt, so können in verschiedenen Ausführungsformen
- ein erstes Sperrelement mit einer Vollverzahnung und ein um 180° gegenüber dem ersten Sperrelement in Umfangsrichtung der Innenverzahnungen der Hohlradscheiben versetzt angeordnetes zweites Sperrelement mit einer Teilverzahnung der Außenverzahnung,
- ein erstes und zweites Sperrelement mit einer Vollverzahnung und ein drittes Sperrelement mit einer Teilverzahnung, die in Umfangsrichtung der Innenverzahnungen der Hohlradscheiben um 120° versetzt zueinander angeordnet sind, oder
- zwei Sperrelemente mit einer Vollverzahnung und zwei Sperrelemente mit einer Teilverzahnung, die in Umfangsrichtung der Innenverzahnungen der Hohlradscheiben um 90° versetzt zueinander angeordnet sind, wobei Sperrelemente mit gleicher Außenverzahnung benachbart angeordnet sind,
eingesetzt werden.

Das mindestens eine Sperrelement kann in einer ersten Ausführungsform als Schieber ausgebildet werden, der in einem mit der ersten Hohlradscheibe verbundenen Führungselement radial geführt und um einen möglichst nahe an der Verzahnung liegenden Kipppunkt mit einem geringen Winkel kipp- oder schwenkbar ist.

Zum Kippen oder Schwenken des Sperrelements in einem geringen Winkelbereich kann das Führungselement Kippschultern an seinem der Verzahnung benachbarten Enden aufweisen. Alternativ weist das Sperrelement ballig ausgebildete Seitenflanken auf, die an den geraden Führungsflächen des Führungselements anliegen.

In einer zweiten Ausführungsform kann das Sperrelement als Schwenkelement ausgebildet sein, das um eine Anlenkung an dem mit dem Sitzuntergestell verbundenen Beschlagteil bzw. der Hohlradscheibe schwenkbar ist. Diese Ausführungsform ermöglicht einen geringeren Bauraum als die Ausgestaltung des Sperrelements als Schieber.

Vorzugsweise besteht die Einrichtung zum Steuern der radialen Bewegung des Sperrelementes aus einer Nockenscheibe, die in Verriegelungsrichtung des Sperrelements derart vorgespannt ist, dass ein dem Sperrelement zugeordneter Nocken das Sperrelement derart radial verschiebt, dass die Außenverzahnung des Sperrelements in die Innenverzahnungen der Hohlradscheiben eingreift.

Zum Vorspannen der Nockenscheibe in Richtung eines Eingriffs der Außenverzahnung des Sperrelements in die Innenverzahnungen der beiden Hohlradscheiben dient eine einerseits an der Nockenscheibe und andererseits an dem Führungselement für das Sperrelement abgestützte Feder, insbesondere einer Torsions- oder Drehfeder.

Zum Verstellen des Neigungswinkels der Rückenlehne ist die Nockenscheibe mittels eines Betätigungshebels um eine Achse drehbar, wobei beim Schwenken des Betätigungshebels aus der die Rückenlehne feststellenden Position, in der die Außenverzahnung des Sperrelements in die Innenverzahnungen der ersten und zweiten Hohlradscheibe eingreift, in der einen oder anderen Richtung ein mit der Nockenscheibe verbundener Nockenstift das Sperrelement radial derart verstellt, dass die Außenverzahnung in der Position zum Verstellen der Rückenlehne aus den Innenverzahnungen der ersten und zweiten Hohlradscheibe herausgehoben ist.

Zum Herausheben der Außenverzahnung des Sperrelements aus den Innenverzahnungen der Hohlradscheiben enthält das Sperrelement eine Rückholkulisse in die der mit der Nockenscheibe verbundene Nockenstift eingreift, der bei in die Innenverzahnungen der Hohlradscheiben eingreifender Außenverzahnung des Sperrelements in einer der Mitte der Hohlradscheiben näher liegenden Vertiefung der Rückholkulisse angeordnet ist, während er zum Herausheben der Außenverzahnung des Sperrelements aus den Innenverzahnungen der Hohlradscheiben an zwei seitlich der Vertiefung angeordneten Schultern der Rückholkulisse anliegt.

Da das mindestens eine Sperrelement an der feststehenden, mit dem Sitzuntergestell verbundenen Hohlradscheibe angeordnet ist, kann die Innenverzahnung der ersten Hohlradscheibe aus einem Innenverzahnungsabschnitt bestehen, der an dem mit der Außenverzahnung des Sperrelementes fluchtenden Umfangsabschnitt der ersten Hohlradscheibe ausgebildet ist bzw. bei der Anordnung von mehreren gleichmäßig am Umfang der Innenverzahnung der ersten Hohlradscheibe angeordneten Sperrelementen aus Innenverzahnungsabschnitten bestehen, die an den mit der Außenverzahnung der Sperrelemente fluchtenden Umfangsabschnitten der ersten Hohlradscheibe ausgebildet sind.

Zur formschlüssigen Übertragung der Verstellkraft von dem Betätigungshebel auf die mit der Rückenlehne verbundene zweite Hohlradscheibe weisen die Hohlradscheiben zentrale, miteinander fluchtende, gegebenenfalls schwimmend gelagerte Lageröffnungen und die Nockenscheibe eine mit den Lageröffnungen fluchtende Vierkantöffnung auf, durch die eine mit dem Betätigungshebel verbundene und in den Lageröffnungen gelagerte Vierkantachse gesteckt wird. Dabei ist eine konzentrische Anordnung mit schwimmender Lagerung der Hohlradscheiben bei einer Anordnung von mindestens einem Sperrelement mit einer Vollverzahnung vorzusehen, während eine konzentrische Anordnung mit nicht schwimmender Lagerung der Hohlradscheiben bei einer ausschließlichen Anordnung von Sperrelementen mit als Teilverzahnungsbereiche ausgebildeten Außenverzahnungen möglich ist.

Zur äußeren Verkleidung der Ver- und Feststellvorrichtung können die erste und zweite Hohlradscheibe durch einen Gehäusering eingefasst werden, der gleichzeitig der formschlüssigen Verbindung beider Hohlradscheiben dient.

Anhand eines in der Zeichnung dargestellten Ausführungsbeispieles soll der der Erfindung zugrunde liegende Gedanke näher erläutert werden. Es zeigen:
- Fig. 1 und 2: Explosionsdarstellungen mit den Funktionselementen eines Sitzbeschlages zum Ver- und Feststellen einer Rückenlehne eines Fahrzeugssitzes aus verschiedenen Blickrichtungen;
- Fig. 3: eine perspektivische Darstellung einer am Sitzuntergestell befestigten Hohlradscheibe mit drei darin geführten Sperrelementen und einer Nockenscheibe;
- Fig. 4: eine perspektivische Darstellung der am Sitzuntergestell befestigten Hohlradscheibe mit drei Führungselementpaaren und einem voll verzahnten Sperrelement;
- Fig. 5: die Hohlradscheibe gemäß Fig. 4 mit darin eingesetzten Sperrelementen und einer Drehfeder zum Rückstellen der Nockenscheibe;
- Fig. 6: einen perspektivischen Längsschnitt durch die an der Rückenlehne und am Sitzuntergestell befestigten Hohlradscheiben und ein mit seiner Außenverzahnung in die Innenverzahnungen der Hohlradscheiben eingreifendes voll verzahntes Sperrelement;
- Fig. 7: eine perspektivische Darstellung eines teilverzahnten Sperrelements mit in Umfangsrichtung und axial versetzten Teilverzahnungsbereichen;
- Fig. 8: eine Seitenansicht des mit seiner Teilverzahnung in die Innenverzahnungen der Hohlradscheiben eingreifenden teilverzahnten Sperrelements gemäß Fig. 7;
- Fig. 9: eine perspektivische Draufsicht auf die an der Rückenlehne befestigte Hohlradscheibe mit einer Darstellung der Rückholeinrichtung für die Sperrelemente;
- Fig. 10: eine schematische Darstellung einer schwimmenden Lagerung der Hohlradscheiben bei einem Einsatz von voll verzahnten und teilverzahnten Sperrelementen und
- Fig. 11: eine schematische Darstellung einer nicht schwimmenden Lagerung der Hohlradscheiben bei einem Einsatz von ausschließlich teilverzahnten Sperrelementen.

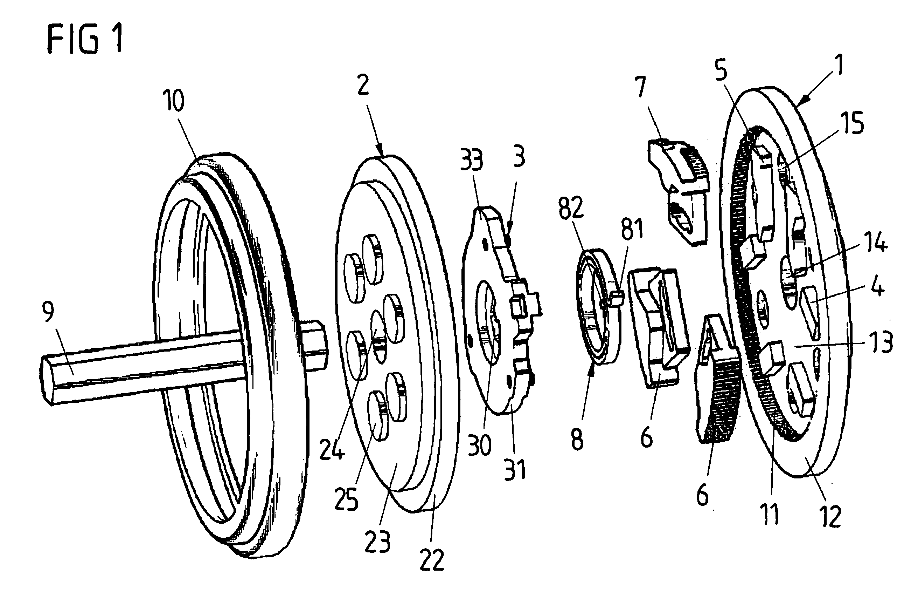

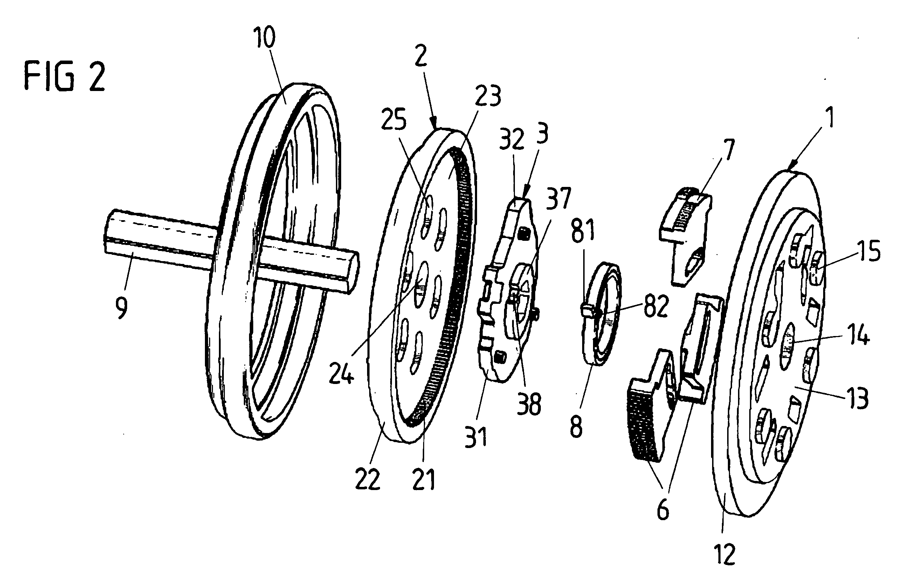

Der in den Fig. 1 und 2 in perspektivischer Ansicht dargestellte Sitzbeschlag zum Ver- und Feststellen einer Rückenlehne eines Fahrzeugsitzes enthält eine am Sitzuntergestell befestigte erste Hohlradscheibe 1 mit einem Hohlrad 12, das eine Innenverzahnung 11 und an einer Stirnseite eine Scheibenfläche 13 aufweist, die mehrere Öffnungen 15 zur Aufnahme von Befestigungselementen zur Verbindung der ersten Hohlradscheibe 1 mit dem Sitzuntergestell des Fahrzeugsitzes und eine Lageröffnung 14 enthält, in der eine Vielkantachse 9 drehbar gelagert ist. Auf der Scheibenfläche 13 der ersten Hohlradscheibe 1 sind drei um 120° zueinander versetzte, paarweise parallel zueinander angeordnete und radial ausgerichtete Führungselemente 4, 5 vorgesehen. Zwischen den Führungselementen 4, 5 sind die Führungsbereiche von drei Sperrelementen 6, 7 angeordnet und in radialer Richtung verschiebbar auf der Scheibenfläche 13 der ersten Hohlradscheibe 1 gelagert.

Die radiale Verschiebebewegung der Sperrelemente 6, 7 wird von einer Nockenscheibe 3 gesteuert, die eine mittige Vielkantöffnung 30 aufweist, in die die Vielkantachse 9 eingreift und dadurch eine formschlüssige Verbindung mit der Nockenscheibe 3 herstellt. Die Steuerung der radialen Bewegung der drei Sperrelemente 6, 7 erfolgt einerseits über am Umfang der Nockenscheibe 3 in einem Abstand von 120° versetzt angeordnete Nocken 31, 32, 33, die den einzelnen Sperrelementen 6, 7 zugeordnet sind, sowie über drei ebenfalls um 120° zueinander versetzte Nockenstifte 34, 35, 36, die in Führungskulissen 65, 75 der Sperrelemente 6, 7 eingreifen. Während die am Umfang der Nockenscheibe 3 verteilt angeordneten Nocken 31, 32, 33 eine radiale Verschiebung der Sperrelemente 6, 7 nach außen steuern, bewirken die Nockenstifte 35, 36, 37 in Verbindung mit an den Sperrelementen 6, 7 ausgebildeten Führungskulissen eine radiale Bewegung der Sperrelemente 6, 7 nach innen in Richtung auf die Vielkantachse 9.

Eine Drehfeder 8 ist mit ihren abgewinkelten Federenden 81, 82 einerseits in eine Federeinhängung 38 an einem ringförmigen Ansatz 37 der Nockenscheibe 3 und andererseits in eine Federeinhängung eines der ortsfest angeordneten Führungselemente 4, 5 eingehängt und bewirkt, dass die Nockenscheibe 3 in Sperrrichtung vorgespannt wird und nach einer Auslenkung durch eine Drehung der Vielkantachse 9 in eine Ausgangsstellung zurückkehrt.

Eine an der Rückenlehne befestigte zweite Hohlradscheibe 2 weist entsprechend der ersten Hohlradscheibe 1 ein Hohlrad 22 mit einer Innenverzahnung 21 und eine mit einer Stirnseite des Hohlrades 22 verbundene Scheibenfläche 23 mit Öffnungen 25 zur Aufnahme von Befestigungselementen zur Verbindung der zweiten Hohlradscheibe 2 mit der Rückenlehne des Fahrzeugsitzes auf. In einer mittig in der Scheibenfläche 23 angeordneten Lageröffnung 24 wird die Vielkantachse 9 gegebenenfalls schwimmend abgestützt und drehbar geführt.

Ein Gehäusering 10 wird auf die Außenumfangsflächen der ersten und zweiten Hohlradscheibe 1, 2 aufgesteckt und bildet den umfangsseitigen Abschluss des Sitzbeschlages zum Ver- und Feststellen der Rückenlehne eines Fahrzeugsitzes.

Der in der Verstellachse der Rückenlehne angeordnete Beschlag zum Ver- und Feststellen des Neigungswinkels der Rückenlehne in Bezug auf das Sitzuntergestell des Fahrzeugsitzes bewirkt ein Freischalten der Kopplung zwischen der Rückenlehne und dem Sitzuntergestell, so dass die in Richtung auf einen minimalen Winkel zwischen der Sitzfläche des Fahrzeugsitzes und der Rückenlehnenfläche mit beispielsweise einem oder mehreren Federelementen vorgespannte Rückenlehne gegen die Vorspannkraft in Richtung auf größere Winkel zwischen der Sitzfläche und der Rückenlehnenfläche verstellt werden kann. Das Aufheben der Kopplung zwischen der Rückenlehne und dem Sitzuntergestell und dementsprechend zwischen der am Sitzuntergestell befestigten ersten Hohlradscheibe 1 und der an der Rückenlehne befestigten zweiten Hohlradscheibe 2 sowie das erneute Festlegen der Winkelstellung der Rückenlehne gegenüber dem Sitzuntergestell und damit der zweiten Hohlradscheibe 2 an der ersten Hohlradscheibe 1 wird nachstehend näher erläutert.

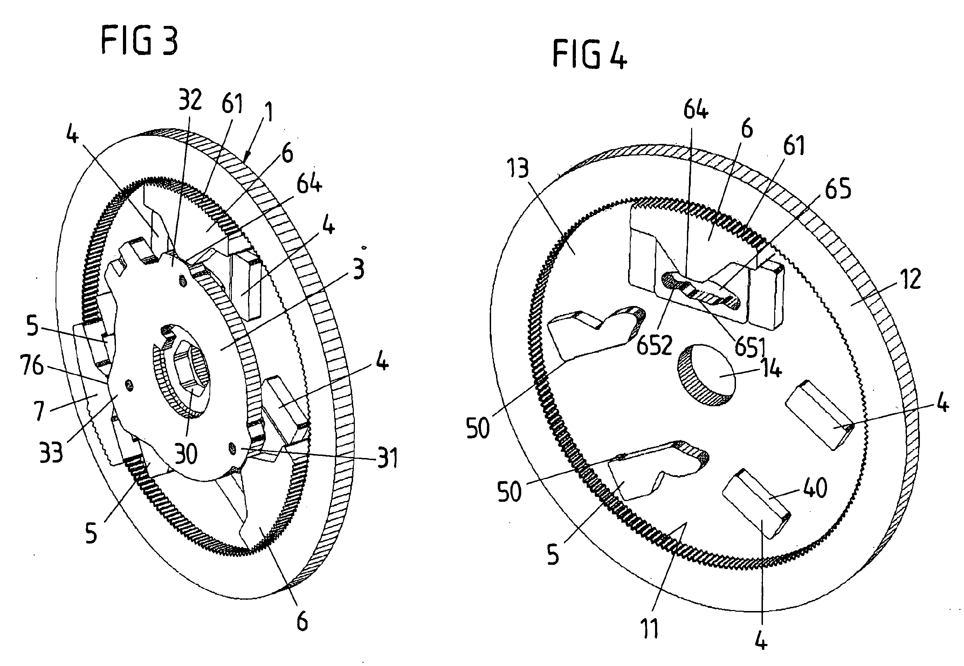

In den Fig. 3 und 4 ist in einer perspektivischen Ansicht die am Sitzuntergestell befestigte Hohlradscheibe 1 dargestellt, an deren Scheibenfläche 13 die paarweise angeordneten und 120° in Umfangsrichtung gegeneinander versetzten Führungselemente 4, 5 zur Aufnahme von drei um 120° in Umfangsrichtung versetzt angeordneten Sperrelementen 6, 7 angeordnet sind. Zwei der Führungselementpaare 4 bilden zwischen sich Führungsflächen 40 aus, an denen Gleit- und Führungsflächen 60 eines ersten Typs Sperrelemente 6 anliegen. Diese Sperrelemente 6 weisen an ihrer Peripherie eine Außenverzahnung 61 auf, deren Zahnbreite so bemessen ist, dass sie die Innenverzahnungen 11, 21 der Hohlradscheiben 1, 2 überdeckt und somit mit maximaler Formschlussfläche in die entsprechenden Innenverzahnungsabschnitte der Innenverzahnungen 11, 21 der Hohlradscheiben 1, 2 eingreift.

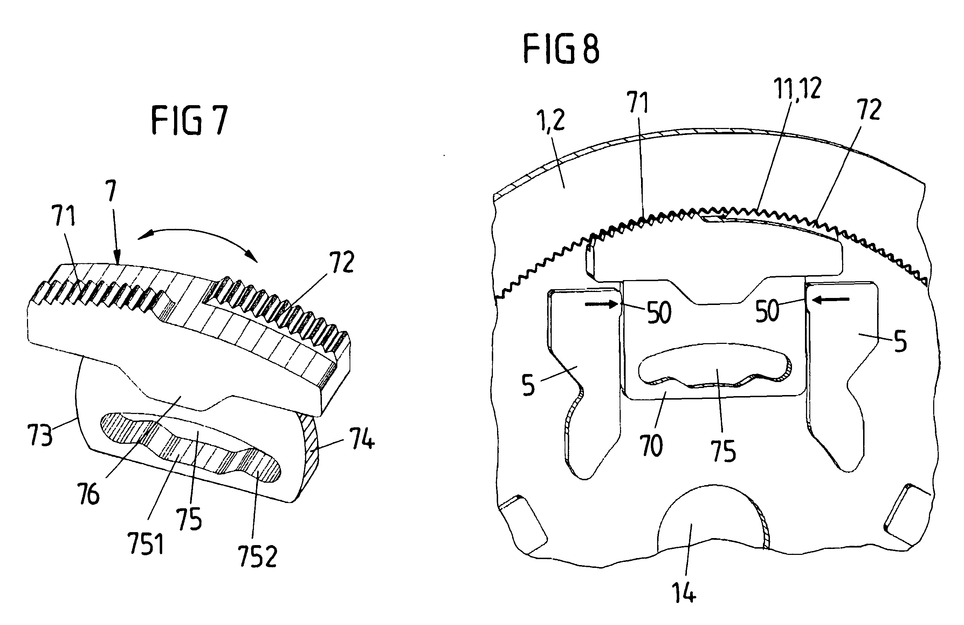

Ein drittes Paar Führungselemente 5, das gegenüber den beiden anderen Führungselementpaaren 4 um 120° in Umfangsrichtung versetzt auf der Scheibenfläche 13 der Hohlradscheibe 1 angeordnet ist, weist anstelle von durchgehenden Führungsflächen 40 an ihren oberen, der Innenverzahnung 11 der Hohlradscheibe 1 benachbarten Enden Kippschultern 50 auf, die einen Kipppunkt für einen zweiten Typ eines Sperrelements 7 bilden, das in den Fig. 7 und 8 detailliert dargestellt ist und einen Ausgleich eines durch Fertigungstoleranzen bedingten Spiels bewirkt, das auf die Herstellung der Hohlradscheiben 1, 2 mit unterschiedlichen Werkzeugen zurückzuführen ist, woraus unterschiedliche Verzahnungsgeometrien der Innenverzahnungen 11, 21 und/oder unterschiedliche Innendurchmesser der Hohlräder 12, 22 der Hohlradscheiben 1, 2 und/oder ein Achsversatz der Hohlradscheiben 1, 2 resultieren.

Zum Spielausgleich weist dieser zweite Typ eines Sperrelementes 7 gemäß den Fig. 7 und 8 anstelle einer über die gesamte Peripherie reichenden Außenverzahnung 61 zwei in Umfangsrichtung und in axialer Richtung gegeneinander versetzte Teilverzahnungsbereiche 71, 72 auf, von denen ein erster Teilverzahnungsbereich 71 in die Innenverzahnung 21 der an der Rückenlehne befestigten zweiten Hohlradscheibe 2 eingreift, während ein in Umfangsrichtung und axial dazu versetzter zweiter Teilverzahnungsbereich 72 in die Innenverzahnung 11 der am Sitzuntergestell befestigten ersten Hohlradscheibe 1 eingreift.

Da zum Spielausgleich die Zähne der Teilverzahnungsbereiche 71, 72 des teilverzahnten Sperrelementes 7 zunächst ungleich tief in die Innenverzahnungen 11, 21 der Hohlradscheiben 1, 2 eingreifen, ist zum Spielausgleich zusätzlich eine Kippbewegung des teilverzahnten Sperrelementes 7 erforderlich, um einen hinreichend tiefen Eingriff in die Innenverzahnungen 11, 21 der Hohlradscheiben 1, 2 in der Sperrstellung oder Feststellposition des Sitzbeschlages sicher zu stellen. Dem entsprechend führt das in den Fig. 7 und 8 isoliert dargestellte teilverzahnte Sperrelement 7 eine Kippbewegung entsprechend dem in Fig. 7 eingetragenen Doppelpfeil um einen Kipppunkt aus, der möglichst nahe an der Peripherie des teilverzahnten Sperrelements 7 liegt. Um diese Kippbewegung zu ermöglichen, liegt das teilverzahnte Sperrelement 7 nicht wie die voll verzahnten Sperrelemente 6 mit Gleitflächen an durchgehenden Führungsflächen 40 der Führungselemente 4 an, sondern an den in Fig. 8 dargestellten Kippschultern 50 an, die einen definierten Drehpunkt für den Führungsbereich 70 des teilverzahnten Sperrelements 7 bilden, der möglichst nah an den Innenverzahnungen 11, 21 der Hohlradscheiben 1, 2 liegt, um eine geringe Verlagerung des teilverahnten Sperrelements 7 zu gewährleisten.

In alternativer Ausführung können die das teilverzahnte Sperrelement 7 aufnehmenden Führungselemente 6 ebenfalls geradlinige, radial ausgerichtete Führungsflächen aufweisen, während die Gleitflächen 73, 74 des teilverzahnten Sperrelements 7 gemäß Fig. 7 ballig ausgebildet sind und damit eine Kippbewegung des teilverzahnten Sperrelements in Richtung des in Fig. 7 eingetragenen Doppelpfeils zum Eingriff der Teilverzahnungsbereiche 71, 72 in beide Innenverzahnungen 11, 21 der Hohlradscheiben 1, 2 ermöglichen.

Abweichend von in radialer Richtung verschiebbaren Sperrelementen 6, 7, die dementsprechend als "Schieber" wirken, können auch als Schwenkelemente ausgebildete Sperrelemente 6, 7 eingesetzt werden, die um eine Schwenkachse an der Scheibenfläche 13 der Hohlradscheibe 1 angelenkt sind und mit ihren voll verzahnten oder teilverzahnten Außenverzahnungen 61, 71, 72 in die Innenverzahnungen 11, 21 der Hohlradscheiben 1, 2 zum Feststellen des Beschlages hineinschwenken. Diese Ausführungsform kann in bestimmten Anwendungsfällen für den verfügbaren oder erforderlichen Bauraum des Beschlages vorteilhaft sein.

Die um 120° gegeneinander in Umfangsrichtung versetzt angeordneten voll verzahnten Sperrelemente 6 bzw. das teilverzahnte Sperrelement 7 greifen mit ihren Außenverzahnungen 61, 71, 72 in der Feststellposition des Ver- und Feststellbeschlages in beide Innenverzahnungen 11, 21 der Hohlradscheiben 1, 2 ein, wobei in Fig. 3 zur besseren Erkennbarkeit der Anordnung und Ausrichtung der Sperrelemente 6, 7 die zweite Hohlradscheibe 2 weggelassen wurde. Dadurch wird in der Feststellposition des Beschlages eine auf die Rückenlehne ausgeübte Kraft über die an der Rückenlehne befestigte zweite Hohlradscheibe 2, deren Innenverzahnung 21 und über die Außenverzahnungen 61, 71, 72 direkt in die Innenverzahnung 11 der am Sitzuntergestell befestigten ersten Hohlradscheibe 1 eingeleitet, d. h., es erfolgt ein direkter Kraftfluss von der Innenverzahnung 21 der an der Rückenlehne befestigten Hohlradscheibe 2 zur Innenverzahnung 11 der am Sitzuntergestell befestigten Hohlradscheibe 1 unter Zwischenschaltung ausschließlich der Außenverzahnungen 61, 71, 72 der Sperrelemente 6, 7.

Infolge dieses direkten Kraftflusses werden die Sperrelemente 6, 7 und die an der Scheibenfläche 13 der am Sitzuntergestell befestigten ersten Hohlradscheibe 1 angebrachten Führungselemente 4, 5 nicht oder nur geringfügig belastet. Zudem führt ein zwischen den Führungselementen 4, 5 und den Sperrelementen 6, 7 auftretendes Spiel nicht zu einem Bewegungsspiel der Rückenlehne in der Feststellposition des Beschlages und es treten keine hohen mechanischen Belastungen der in Eingriff stehenden Führungsflächen der Führungselemente 4, 5 mit den Gleitflächen der Sperrelemente 6, 7 wie beim Stand der Technik auf, die zu einem zusätzlichen Spiel führen würden. Stattdessen erfolgt ein direkter Kraftfluss zwischen den Hohlradscheiben 1, 2 durch ausschließliches Zwischenschalten der Außenverzahnung eines Sperrelements bzw. der Außenverzahnungen mehrerer Sperrelemente 6, 7 wie bei der in den Fig. 3 und 4 dargestellten Anordnung von drei um umfangsseitig 120° gegeneinander versetzten Sperrelementen 6, 7.

Die zur Steuerung der radialen Verschiebung der Sperrelemente 6, 7 dienende Nockenscheibe 3 weist gemäß der perspektivischen Darstellung in Fig. 3 drei Nocken 31, 32, 33 auf, die mit Anlageflächen 64, 76 der Sperrelemente 6, 7 in der Feststellposition des Beschlages zusammenwirken. In dieser Feststellposition des Beschlages greifen die Außenverzahnungen 61, 71, 72 der Sperrelemente 6, 7 mit größtmöglicher Verzahnungstiefe in die beiden Innenverzahnungen 11, 21 der Hohlradscheiben 1, 2 ein und sichern die Einstellung der Rückenlehnenneigung.

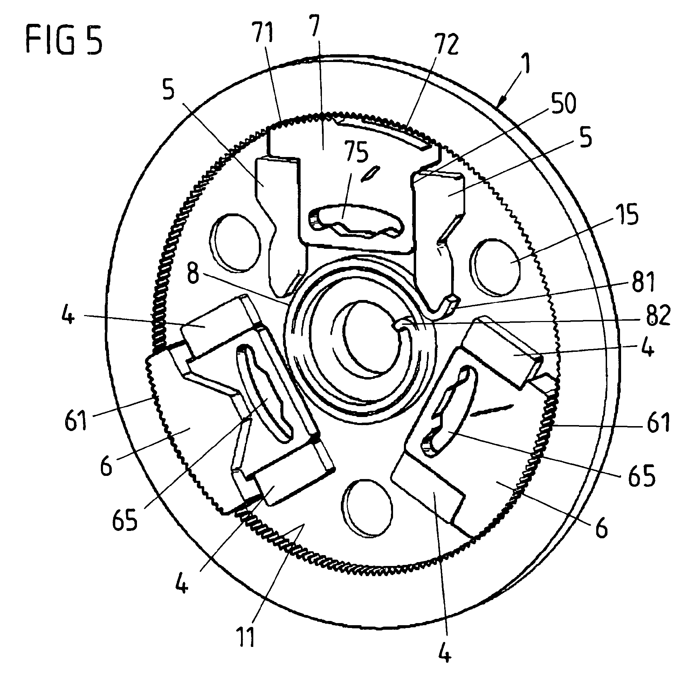

Fig. 5 zeigt in einer perspektivischen Draufsicht auf die am Sitzuntergestell befestigte erste Hohlradscheibe 1 die Anordnung und Ausrichtung der drei Führungselementpaare 4, 5 sowie der darin geführten Sperrelemente 6, 7, von denen zwei Sperrelemente 6 als voll verzahnte Sperrelemente 6 ausgebildet sind, die mit ihrer vollen Verzahnungsbreite in die Innenverzahnungen 11, 21 der Hohlradscheiben 1 ,2 eingreifen, während das dritte Sperrelement als teilverzahntes Sperrelement 7 ausgebildet ist, das mit seinen beiden in Umfangsrichtung und axial zueinander versetzten Teilverzahnungsbereichen 71, 72 jeweils in die Innenverzahnung 11 der ersten Hohlradscheibe 1 bzw. in die Innenverzahnung 21 der zweiten Hohlradscheibe 2 eingreift.

Da die voll verzahnten bzw. teilverzahnten Außenverzahnungen 61, 71, 72 der Sperrelemente 6, 7 infolge der mit der Scheibenfläche 13 der ersten Hohlradscheibe 1 verbundenen Führungselemente 4, 5 nur auf Verzahnungsbereiche der gesamten Innenverzahnung 11 der Hohlradscheibe 1 ausgerichtet sind und diese Ausrichtung auch in der Verstellposition des Beschlages nicht verändern, können die zwischen den Sperrelementen 6, 7 liegenden Verzahnungsbereiche der Innenverzahnung 11 der ersten Hohlradscheibe 1 entfallen, was zu einer einfacheren Herstellung der ersten Hohlradscheibe 1 führt, da die zum Herstellen der Innenverzahnung 11 erforderliche Presskraft verringert werden kann. Dagegen ist eine durchgehende Innenverzahnung 21 der zweiten Hohlradscheibe 2 unabdingbar, da diese infolge ihrer Mitführung beim Verstellen der Rückenlehne gegenüber den Außenverzahnungen 61, 71, 72 der Sperrelemente 6, 7 verschwenkt wird, so dass unterschiedliche Verzahnungsbereiche in Eingriff mit den Außenverzahnungen 61, 71, 72 der Sperrelemente 6, 7 kommen.

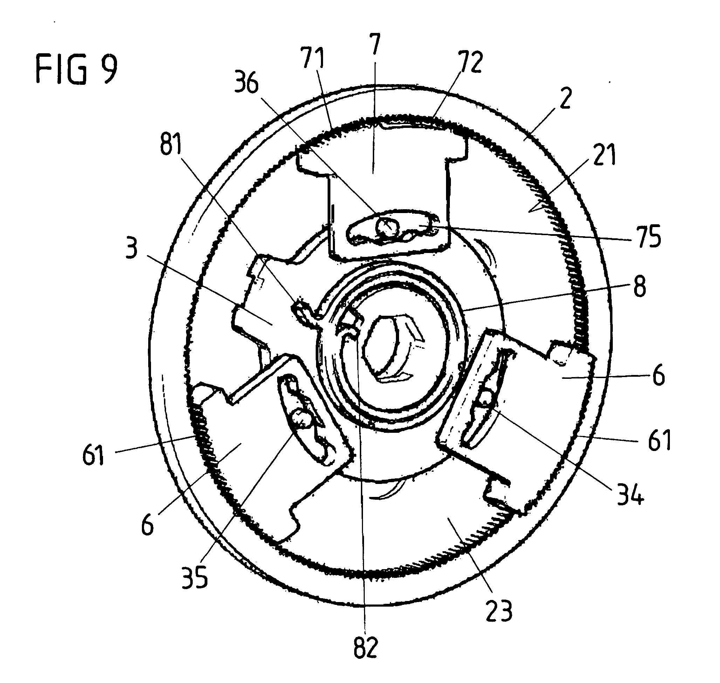

Zum Verstellen des Neigungswinkels der Rückenlehne gegenüber der Sitzfläche bzw. dem Sitzuntergestell des Fahrzeugsitzes wird ein mit der Vielkantachse 9 verbundener Betätigungshebel in der einen oder anderen Richtung um die durch die Vielkantachse 9 gebildete Verstellachse verschwenkt, was aufgrund der formschlüssigen Verbindung der Nockenscheibe 3 über eine Vielkantöffnung 30 der Nockenscheibe 3 zu einem Verdrehen der Nockenscheibe 3 führt. Dadurch werden die Nocken 31, 32, 33 der Nockenscheibe 3 aus ihrer Anlage an den Anlageflächen 64, 76 der Sperrelemente 6, 7 herausgedreht. Gleichzeitig wird eine in Fig. 9 dargestellte Rückholeinrichtung wirksam, mit der die Außenverzahnungen 61, 71, 72 der Sperrelemente 6, 7 aus dem Verzahnungseingriff in die Innenverzahnungen 11, 21 der Hohlradscheiben 1, 2 herausgehoben werden, um die Verstellung des Neigungswinkels der Rückenlehne gegenüber dem Sitzuntergestell einleiten zu können.

Die Rückholeinrichtung besteht aus Führungskulissen 65, 75 der Sperrelemente 6, 7, in die Nockenstifte 34, 35, 36 der Nockenscheibe 3 eingreifen. Beim Verdrehen der Nockenscheibe 3 werden die Nockenstifte 34, 35, 36 aus Vertiefungen 651, 751 der Führungskulissen 65, 75 der Sperrelemente 6, 7 herausbewegt und in die den Vertiefungen 651, 751 benachbarten Schultern 652, 752 bewegt, so dass die Sperrelemente 6, 7 in Richtung der Vielkantachse 9 gezogen und dadurch die Außenverzahnungen 61, 71, 72 der Sperrelemente 6, 7 aus ihrem Verzahnungseingriff in die Innenverzahnungen 11, 21 der Hohlradscheiben 1, 2 herausgehoben werden.

Durch einen entsprechenden Kraftangriff an der Rückenlehne, die beispielsweise in Richtung eines minimalen Winkels gegenüber dem Sitzuntergestell vorgespannt ist, kann die Rückenlehne um die Verstellachse, mit der sie am Sitzuntergestell angelenkt ist, in eine gewünschte Winkelstellung verschwenkt werden.

Durch Loslassen oder Zurückführen des mit der Vielkantachse 9 verbundenen Betätigungshebels wird die Nockenscheibe 3 durch die Wirkung der einerseits in eine Federanhängung eines Führungselements 5 (Fig. 5) und andererseits in die Federeinhängung 38 der Nockenscheibe 3 (Fig. 2) eingehängten Drehfeder 8 wieder in die in Fig. 3 dargestellte Position zurückgedreht, die der Feststellposition des Beschlages entspricht, in der die Nocken 31, 32, 33 der Nockenscheibe 3 an den Anlageflächen 64, 76 der Sperrelemente 6, 7 anliegen und dadurch die Sperrelemente 6, 7 radial innerhalb der Führungselemente 4, 5 soweit verschieben, dass deren Außenverzahnungen 61, 71, 72 in die Innenverzahnungen 11, 21 der Hohlradscheiben 1, 2 eingreifen. Dadurch wird die an der Rückenlehne befestigte Hohlradscheibe 2 wieder an der mit dem Sitzuntergestell verbundenen Hohlradscheibe 1 mit direktem Kraftfluss zwischen den Innenverzahnungen 11, 21 der Hohlradscheiben 1, 2 unter Zwischenschaltung der Außenverzahnungen 61, 71, 72 der Sperrelemente 6, 7 festgelegt.

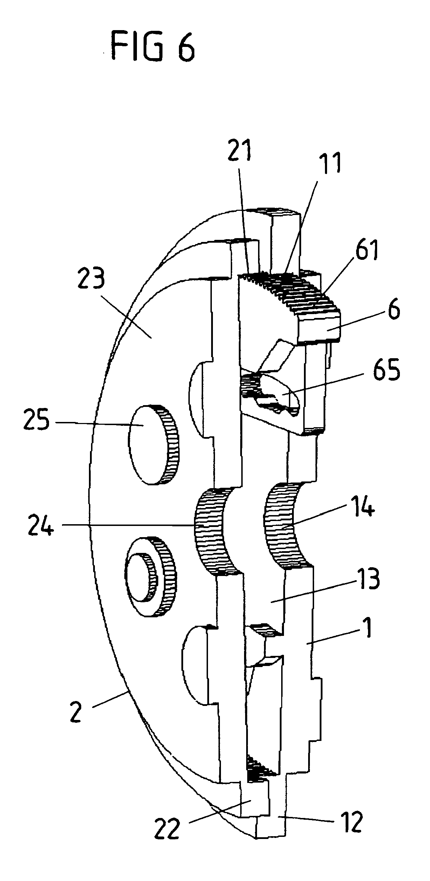

Fig. 6 verdeutlicht in einem Längsschnitt durch die Hohlradscheiben 1, 2 diesen direkten Kraftfluss zwischen den Innenverzahnungen 11, 21 der Hohlradscheiben 1, 2 unter Zwischenschaltung der Außenverzahnung 61 des in dieser Darstellung erkennbaren voll verzahnten Sperrelements 6. Fig. 6 zeigt weiterhin die miteinander fluchtenden Lageröffnungen 14, 24 der Hohlradscheiben 1, 2 sowie die ineinander geschachtelte Anordnung beider Hohlradscheiben 1, 2.

Anstelle der in dem vorstehend anhand der Fig. 1 bis 9 beschriebenen Ausführungsbeispiel eingesetzten drei um jeweils 120° umfangsseitig gegeneinander versetzten Sperrelemente 6, 7 ist auch eine andere Anzahl und Anordnung von Sperrelementen zum Ver- und Feststellen der Rückenlehne eines Fahrzeugsitzes mit direktem Kraftfluss zwischen den Innenverzahnungen 11, 21 der am Sitzuntergestell befestigten ersten Hohlradscheibe 1 einerseits und der an der Rückenlehne befestigten zweiten Hohlradscheibe 2 andererseits unter Zwischenschaltung der Außenverzahnungen 61, 71, 72 von Sperrelementen 6, 7 möglich. Dabei genügt zur Erfüllung des Feststellens des Beschlages ein einzelnes Sperrelement, das als voll verzahntes Sperrelement 6 oder teilverzahntes Sperrelement 7 ausgebildet sein kann, das mit seiner als Vollverzahnung 61 ausgebildeten Außenverzahnung bzw. mit seinen als Teilverzahnungsbereichen 71, 72 ausgebildeten Außenverzahnung in die Innenverzahnungen 11, 21 der Hohlradscheiben 1, 2 eingreift.

In alternativer Ausführungsform können beispielsweise zwei um 180° gegeneinander in Umfangsrichtung versetzte Sperrelemente vorgesehen werden, die als voll verzahnte Sperrelemente 6 oder teilverzahnte Sperrelemente 7 ausgebildet sind. Auch eine Kombination eines voll verzahnten Sperrelements 6 und eines teilverzahnten Sperrelements 7 ist in dieser Ausführungsform möglich.

In einer weiteren alternativen Ausführungsform können abweichend von dem vorstehend beschriebenen Ausführungsbeispiel vier um ca. 90° in Umfangsrichtung gegeneinander versetzte Sperrelemente vorgesehen werden, die ebenfalls als voll verzahnte Sperrelemente 6 oder teilverzahnte Sperrelemente 7 ausgebildet sind. Auch in dieser Ausführungsform ist eine Kombination von voll verzahnten Sperrelementen 6 und teilverzahnten Sperrelementen 7 möglich, wobei Sperrelemente mit gleicher Verzahnung benachbart angeordnet sind.

Beim Einsatz eines voll verzahnten Sperrelements 6 oder mehrerer voll verzahnter Sperrelemente 6 werden fertigungsbedingte Toleranzen bezüglich der Durchmesser, der Verzahnungsgeometrien und/oder eines Achsversatzes der Hohlradscheiben 1, 2 nicht ausgeglichen, so dass eine entsprechende Fertigungspräzision erforderlich ist, um Fertigungstoleranzen möglichst gering zu halten. Dagegen gewährleistet der Einsatz von teilverzahnten und kippbar bzw. schwenkbar gelagerten Sperrelementen 7 einen Toleranzausgleich, da das Kippen bzw. Schwenken der teilverzahnten Sperrelemente 7 solange erfolgt, bis ein vollständiger Eingriff der Teilverzahnungsbereiche 71, 72 in die Innenverzahnungen 11, 21 der Hohlradscheiben 1, 2 erreicht ist.

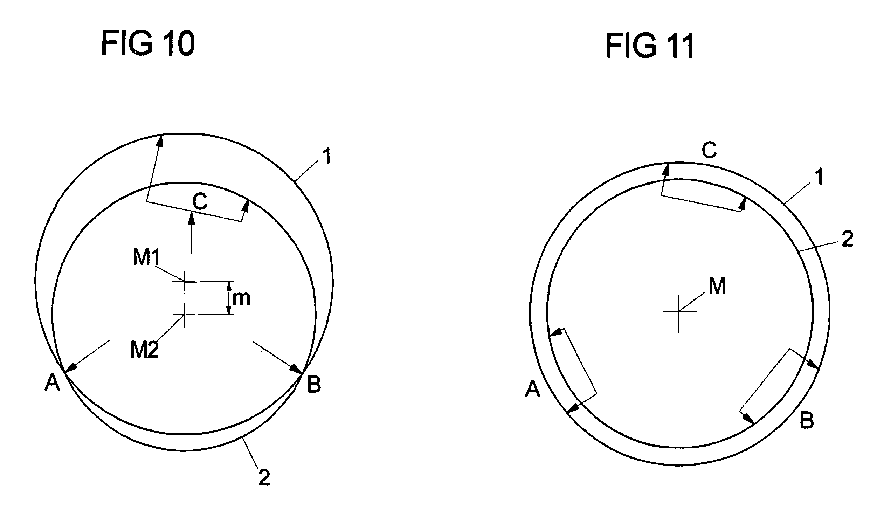

Zur Lagerung der Hohlradscheiben 1, 2 ist weiterhin zu unterscheiden, ob ausschließlich teilverzahnte und kippbar bzw. schwenkbar gelagerte Sperrelemente 7 oder in Kombination voll verzahnte Sperrelemente 6 und teilverzahnte und kippbar/schwenkbar gelagerte Sperrelemente 7 eingesetzt werden. Im letztgenannten Fall ist eine schwimmende Lagerung der Hohlradscheiben 1, 2 erforderlich wie sie schematisch in Fig. 10 mit einem Einsatz von zwei voll verzahnten Sperrelementen A und B und einem teilverzahnten Sperrelement C dargestellt ist. Die schwimmende Lagerung ermöglicht einen Mittenversatz m zwischen den Drehmittelpunkten M1 und M2 der beiden Hohlradscheiben 1, 2 und ist erforderlich, um einen Eingriff der Außenverzahnung 61 des wenigstens einen voll verzahnten Sperrelements 6 in die Innenverzahnungen 11, 21 der Hohlradscheiben 1, 2 sicherzustellen. Der erforderliche Toleranzausgleich erfolgt dann entsprechend der vorstehenden Beschreibung durch das kipp- bzw. schwenkbar gelagerte und teilverzahnte Sperrelement 7.

Werden dagegen entsprechend der schematischen Darstellung gemäß Fig. 11 ausschließlich teilverzahnte und kipp- bzw. schwenkbar gelagerte Sperrelemente 7 eingesetzt, so kann auf eine schwimmende Lagerung mit einem zugelassenen Mittenversatz m der beiden Hohlradscheiben 1, 2 verzichtet und stattdessen eine konzentrische Anordnung der Hohlradscheiben 1, 2 um einen Drehmittelpunkt M vorgesehen werden. Aufgrund des Einsatzes von kipp- oder schwenkbar gelagerten teilverzahnten Sperrelementen 7 ist es möglich, die Hohlradscheiben 1, 2 kostengünstig mit vergleichsweise großem Toleranzspektrum zu fertigen, da der erforderliche Toleranzausgleich durch die teilverzahnten Sperrelemente 7 bewirkt wird.

### Bezugszeichenliste

- 1: erste Hohlradscheibe
- 2: zweite Hohlradscheibe
- 3: Nockenscheibe
- 4, 5: Führungselemente
- 6: Voll verzahntes Sperrelement
- 7: Teilverzahntes Sperrelement
- 8: Drehfeder
- 9: Vielkantachse
- 10: Gehäusering
- 11, 21: Innenverzahnungen
- 12, 22: Hohlrad
- 13, 23: Scheibenfläche
- 14, 24: Lageröffnung
- 15, 25: Öffnungen
- 30: Vielkantöffnung
- 31, 32, 33: Nocken
- 34, 35, 36: Nockenstifte
- 37: ringförmigen Ansatz
- 38: Federeinhängung
- 40: Führungsfläche
- 50: Kippschulter
- 61: Voll verzahnte Außenverzahnung
- 64: Anlagefläche
- 65: Führungskulisse
- 70: Führungsbereich
- 71, 72: Teilverzahnungsbereiche
- 73, 74: Ballige Gleitflächen
- 75: Führungskulisse
- 81, 82: abgewinkelten Federenden
- 651, 751: Vertiefungen
- 652, 752: Schultern
- M, M1, M2: Drehmittelpunkte
- m: Mittenversatz

## Patentansprüche

1. Vorrichtung zum Ver- und Feststellen einer Rückenlehne eines Fahrzeugsitzes mit
- einer mit dem Sitzuntergestell des Fahrzeugsitzes verbundenen ersten Hohlradscheibe (1),
- einer mit der Rückenlehne des Fahrzeugsitzes verbundenen zweiten Hohlradscheibe (2) mit einer Innenverzahnung (21),
- mindestens einem radial beweglich an der ersten Hohlradscheibe (1) angeordneten Sperrelement (6, 7) mit einer die Innenverzahnung (21) der zweiten Hohlradscheibe (2) zumindest teilweise überdeckenden Außenverzahnung (61, 71, 72) und
- einer Einrichtung (3) zum Steuern der radialen Bewegung des Sperrelements (6, 7), das in einer die Rückenlehne feststellenden Position mit seiner Außenverzahnung (61, 71, 72) in die Innenverzahnung (21) der zweiten Hohlradscheibe (2) eingreift und dessen Außenverzahnung (61, 71, 72) in einer Position zum Verstellen der Rückenlehne aus der Innenverzahnung (21) der zweiten Hohlradscheibe (2) herausgehoben ist.
**dadurch gekennzeichnet, dass**
- die erste Hohlradscheibe (1) ebenfalls eine Innenverzahnung (11) aufweist,
- die Außenverzahnung (61, 71, 72) des Sperrelements (6, 7) auch die Innenverzahnung (11) der ersten Hohlradscheibe (1) zumindest teilweise überdeckt und
- das Sperrelement (6, 7) in einer die Rückenlehne feststellenden Position mit seiner Außenverzahnung (61, 71, 72) auch in die Innenverzahnung (11) der ersten Hohlradscheibe (1) eingreift und seine Außenverzahnung (61, 71, 72) in einer Position zum Verstellen der Rückenlehne auch aus der Innenverzahnung (11) der ersten Hohlradscheibe (1) herausgehoben ist.

2. Vorrichtung nach Anspruch 1, **dadurch gekennzeichnet, dass** die Außenverzahnung (61) eines voll verzahnten Sperrelements (6) als Vollverzahnung mit einer Zahnbreite ausgebildet ist, die die Innenverzahnungen (11, 21) der ersten und zweiten Hohlradscheibe (1, 2) im Wesentlichen überdeckt.

3. Vorrichtung nach Anspruch 1, **dadurch gekennzeichnet, dass** die Außenverzahnung eines teilverzahnten Sperrelements (7) in Umfangsrichtung in zwei zueinander beabstandete Bereiche unterteilt ist, in denen eine erste Teilverzahnung (71) der Innenverzahnung (11) der ersten Hohlradscheibe (1) und eine axial zur ersten Teilverzahnung (71) versetzte zweite Teilverzahnung (72) der Innenverzahnung (21) der zweiten Hohlradscheibe (2) zugeordnet ist und dass das teilverzahnte Sperrelement (7) um eine zwischen beiden Teilverzahnungsbereichen (71, 72) liegende Achse kipp- oder schwenkbar ist.

4. Vorrichtung nach mindestens einem der vorangehenden Ansprüche, **gekennzeichnet durch** mindestens zwei in Umfangsrichtung der Innenverzahnungen (11, 21) der Hohlradscheiben (1, 2) versetzt zueinander angeordnete Sperrelemente (6, 7) mit übereinstimmend als Vollverzahnung oder als Teilverzahnung ausgebildeten Außenverzahnungen (61, 71, 72).

5. Vorrichtung nach mindestens einem der vorangehenden Ansprüche 1 bis 3, **gekennzeichnet durch** mindestens zwei in Umfangsrichtung der Innenverzahnungen (11, 21) der Hohlradscheiben (1, 2) angeordnete Sperrelemente (6, 7) mit unterschiedlichen, als Voll- und Teilverzahnungen ausgebildeten Außenverzahnungen (61, 71, 72).

6. Vorrichtung nach Anspruch 5, **gekennzeichnet durch** ein erstes Sperrelement (6) mit einer voll verzahnten Außenverzahnung (61) und ein um 180° gegenüber dem ersten Sperrelement (6) in Umfangsrichtung der Innenverzahnungen (11, 21) der Hohlradscheiben (1, 2) versetzt angeordnetes zweites Sperrelement (7) mit einer teilverzahnten Außenverzahnung (71, 72).

7. Vorrichtung nach Anspruch 5, **gekennzeichnet durch** ein erstes und zweites Sperrelement (6) mit einer voll verzahnten Außenverzahnung (61) und ein drittes Sperrelement (7) mit einer teilverzahnten Außenverzahnung (71, 72), die in Umfangsrichtung der Innenverzahnungen (11, 21) der Hohlradscheiben (1, 2) um 120° versetzt zueinander angeordnet sind.

8. Vorrichtung nach Anspruch 5, **gekennzeichnet durch** zwei Sperrelemente (6) mit einer voll verzahnten Außenverzahnung (61) und zwei Sperrelemente (7) mit einer teilverzahnten Außenverzahnung (71, 72), die in Umfangsrichtung der Innenverzahnungen (11, 21) der Hohlradscheiben (1, 2) um 90° versetzt zueinander angeordnet sind, wobei Sperrelemente (6 bzw. 7) mit gleicher Außenverzahnung (61, 71, 72) benachbart angeordnet sind.

9. Vorrichtung nach mindestens einem der vorangehenden Ansprüche, **dadurch gekennzeichnet, dass** das Sperrelement als Schieber ausgebildet ist, der in einem mit der ersten Hohlradscheibe (1) verbundenen Führungselement (4, 5) radial geführt ist, das Kippschultern (50) aufweist, um die ein Sperrelement (7) mit teilverzahnter Außenverzahnung (71, 72) kipp- oder schwenkbar ist und zum Kippen oder Schwenken mit balligen Gleitflächen (73, 74) an dem Führungselement (4, 5) anliegt.

10. Vorrichtung nach mindestens einem der vorangehenden Ansprüche 1 bis 8, **dadurch gekennzeichnet, dass** das Sperrelement (6, 7) um eine Anlenkung schwenkbar an der ersten Hohlradscheibe (1) angeordnet ist.

11. Vorrichtung nach mindestens einem der vorangehenden Ansprüche, **dadurch gekennzeichnet, dass** die Einrichtung zum Steuern der radialen Bewegung des Sperrelementes (6, 7) aus einer Nockenscheibe (3) besteht, die in Verriegelungsrichtung des Sperrelements (6, 7) derart vorgespannt ist, dass ein dem Sperrelement (6, 7) zugeordneter Nocken (31, 32, 33) das Sperrelement (6, 7) derart radial verschiebt, dass die Außenverzahnung (61, 71, 72) des Sperrelements (6, 7) in die Innenverzahnungen (11, 21) der Hohlradscheiben (1, 2) eingreift.

12. Vorrichtung nach mindestens einem der vorangehenden Ansprüche, **dadurch gekennzeichnet, dass** die Nockenscheibe (3) mittels eines Betätigungshebels um eine Achse drehbar ist und dass beim Schwenken des Betätigungshebels aus der die Rückenlehne feststellenden Position, in der die Außenverzahnung (61, 71, 72) des Sperrelements (6, 7) in die Innenverzahnungen (11, 21) der ersten und zweiten Hohlradscheibe (1, 2) eingreift, in der einen oder anderen Richtung eine mit der Nockenscheibe (3) verbundene Rückholeinrichtung (65, 75; 34, 35, 36) das Sperrelement (6, 7) radial derart verstellt, dass die Außenverzahnung (61, 71, 72) in der Position zum Verstellen der Rückenlehne aus den Innenverzahnungen (11, 21) der ersten und zweiten Hohlradscheibe (1, 2) herausgehoben ist.

13. Vorrichtung nach Anspruch 12, **dadurch gekennzeichnet, dass** das Sperrelement (6, 7) eine Rückholkulisse (65, 75) enthält, in die ein mit der Nockenscheibe (3) verbundener Nockenstift (34, 35, 36) eingreift, der bei in die Innenverzahnungen (11, 21) der Hohlradscheiben (1, 2) eingreifender Außenverzahnung (61, 71, 72) des Sperrelements (6, 7) in einer der Mitte der Hohlradscheiben (1, 2) näher liegenden Vertiefung (651, 751) der Rückholkulisse (65, 75) angeordnet ist, während er zum Herausheben der Außenverzahnung (61, 71, 72) des Sperrelements (6, 7) aus den Innenverzahnungen (11, 21) der Hohlradscheiben (1, 2) an zwei seitlich der Vertiefung (651, 751) angeordneten Schultern (652, 752) der Rückholkulisse (65, 75) anliegt.

14. Vorrichtung nach mindestens einem der vorangehenden Ansprüche, **dadurch gekennzeichnet, dass** die Innenverzahnung (11) der ersten Hohlradscheibe (1) aus einem Innenverzahnungsabschnitt besteht, der an dem mit der Außenverzahnung (61, 71, 72) des Sperrelements (6, 7) fluchtenden Umfangsabschnitt der ersten Hohlradscheibe (1) ausgebildet ist.

15. Vorrichtung nach mindestens einem der vorangehenden Ansprüche, **gekennzeichnet durch** eine konzentrische Anordnung mit schwimmender Lagerung der Hohlradscheiben (1, 2) bei einer Anordnung von mindestens einem Sperrelement (6) mit voll verzahnter Außenverzahnung (61).

16. Vorrichtung nach mindestens einem der vorangehenden Ansprüche 1 bis 12, **gekennzeichnet durch** eine konzentrische Anordnung mit nicht schwimmender Lagerung der Hohlradscheiben (1, 2) bei einer ausschließlichen Anordnung von Sperrelementen (7) mit teilverzahnter Außenverzahnung (71, 72).

17. Vorrichtung nach mindestens einem der vorangehenden Ansprüche, **gekennzeichnet durch** miteinander fluchtende zentrale Lageröffnungen (14, 24) der Hohlradscheiben (1, 2) und eine Vielkantöffnung (30) der Nockenscheibe (3), **durch** die eine mit dem Betätigungshebel verbundene Vielkantachse (9) gesteckt ist.

## Claims

1. A device for adjusting and fixing a backrest of a vehicle seat, comprising
- a first ring gear disk (1) connected with the seat base of the vehicle seat,
- a second ring gear disk (2) with an internal toothing (21), which is connected with the backrest of the vehicle seat,
- at least one blocking element (6, 7) radially movably arranged on the first ring gear disk (1) with an external toothing (61, 71, 72) at least partly covering the internal toothing (21) of the second ring gear disk (2), and
- a means (3) for controlling the radial movement of the blocking element (6, 7), which in a position fixing the backrest engages into the internal toothing (21) of the second ring gear disk (2) with its external toothing (61, 71, 72), and whose external toothing (61, 71, 72) in a position for adjusting the backrest is lifted out of the internal toothing (21) of the second ring gear disk (2),
**characterized in that**
- the first ring gear disk (1) likewise includes an internal toothing (11),
- the external toothing (61, 71, 72) of the blocking element (6, 7) also at least partly covers the internal toothing (11) of the first ring gear disk (1), and
- in a position fixing the backrest with its external toothing (61, 71, 72) the blocking element (6, 7) also engages into the internal toothing (11) of the first ring gear disk (1), and in a position for adjusting the backrest its external toothing (61, 71, 72) also is lifted out of the internal toothing (11) of the first ring gear disk (1).

2. The device according to claim 1, **characterized in that** the external toothing (61) of a fully toothed blocking element (6) is formed as full toothing with a tooth width which substantially covers the internal toothings (11, 21) of the first and the second ring gear disk (1, 2).

3. The device according to claim 1, **characterized in that** in circumferential direction the external toothing of a partly toothed blocking element (7) is divided into two regions spaced from each other, in which a first partial toothing (71) of the internal toothing (11) of the first ring gear disk (1) and a second partial toothing (72) axially offset to the first partial toothing (71) is associated to the internal toothing (21) of the second ring gear disk (2) and that the partly toothed blocking element (7) is tiltable or pivotable about an axis lying between the two partial toothing regions (71, 72).

4. The device according to at least one of the preceding claims, **characterized by** at least two blocking elements (6, 7) arranged offset to each other in circumferential direction of the internal toothings (11, 21) of the ring gear disks (1, 2) with external toothings (61, 71, 72) matchingly formed as full toothing or as partial toothing.

5. The device according to at least one of the preceding claims 1 to 3, **characterized by** at least two blocking elements (6, 7) arranged in circumferential direction of the internal toothings (11, 21) of the ring gear disks (1, 2) with different external toothings (61, 71, 72) formed as full and partial toothings.

6. The device according to claim 5, **characterized by** a first blocking element (6) with a fully toothed external toothing (61) and a second blocking element (7) arranged offset by 180° with respect to the first blocking element (6) in circumferential direction of the internal toothings (11, 21) of the ring gear disks (1, 2) with a partly toothed external toothing (71, 72).

7. The device according to claim 5, **characterized by** a first and a second blocking element (6) with a fully toothed external toothing (61) and a third blocking element (7) with a partly toothed external toothing (71, 72), which are arranged offset to each other by 120° in circumferential direction of the internal toothings (11, 21) of the ring gear disks (1, 2).

8. The device according to claim 5, **characterized by** two blocking elements (6) with a fully toothed external toothing (61) and two blocking elements (7) with a partly toothed external toothing (71, 72), which are arranged offset to each other by 90° in circumferential direction of the internal toothings (11, 21) of the ring gear disks (1, 2), wherein blocking elements (6, 7) with the same external toothing (61, 71, 72) are arranged adjacent to each other.

9. The device according to at least one of the preceding claims, **characterized in that** the blocking element is formed as slide which is radially guided in a guide element (4, 5) connected with the first ring gear disk (1), which includes tilt shoulders (50) about which a blocking element (7) with partly toothed external toothing (71, 72) is tiltable or pivotable, and for tilting or pivoting rests against the guide element (4, 5) with cambered sliding surfaces (73, 74).

10. The device according to at least one of the preceding claims 1 to 8, **characterized in that** the blocking element (6, 7) is arranged on the first ring gear disk (1) so as to be pivotable about an articulation.

11. The device according to at least one of the preceding claims, **characterized in that** the means for controlling the radial movement of the blocking element (6, 7) consists of a cam disk (3) which is biased such in locking direction of the blocking element (6, 7) that a cam (31, 32, 33) associated to the blocking element (6, 7) radially shifts the blocking element (6, 7) such that the external toothing (61, 71, 72) of the blocking element (6, 7) engages into the internal toothings (11, 21) of the ring gear disks (1, 2).

12. The device according to at least one of the preceding claims, **characterized in that** the cam disk (3) is rotatable about an axis by means of an actuating lever and that on pivoting the actuating lever from the position fixing the backrest, in which the external toothing (61, 71, 72) of the blocking element (6, 7) engages into the internal toothings (11, 21) of the first and the second ring gear disk (1, 2), a retracting means (65, 75; 34, 35, 36) connected with the cam disk (3) radially adjusts the blocking element (6, 7) in the one or other direction such that in the position for adjusting the backrest the external toothing (61, 71, 72) is lifted out of the internal toothings (11, 21) of the first and the second ring gear disk (1, 2).

13. The device according to claim 12, **characterized in that** the blocking element (6, 7) contains a retracting link (65, 75) into which a cam pin (34, 35, 36) connected with the cam disk (3) engages, which when the external toothing (61, 71, 72) of the blocking element (6, 7) engages into the internal toothings (11, 21) of the ring gear disks (1, 2) is arranged in a depression (651, 671) of the retracting link (65, 75) located closer to the center of the ring gear disks (1, 2), while for lifting the external toothing (61, 71, 72) of the blocking element (6, 7) out of the internal toothings (11, 21) of the ring gear disks (1, 2) it rests against two shoulders (652, 752) of the retracting link (65, 75) arranged laterally of the depression (651, 751).

14. The device according to at least one of the preceding claims, **characterized in that** the internal toothing (11) of the first ring gear disk (1) consists of an internal toothing portion which is formed at the circumferential portion of the first ring gear disk (1) aligned with the external toothing (61, 71, 72) of the blocking element (6, 7).

15. The device according to at least one of the preceding claims, **characterized by** a concentric arrangement with floating bearing of the ring gear disks (1, 2) in an arrangement of at least one blocking element (6) with fully toothed external toothing (61).

16. The device according to at least one of the preceding claims 1 to 12, **characterized by** a concentric arrangement with non-floating bearing of the ring gear disks (1, 2) in an exclusive arrangement of blocking elements (7) with partly toothed external toothing (71, 72).

17. The device according to at least one of the preceding claims, **characterized by** aligned central bearing openings (14, 24) of the ring gear disks (1, 2) and a polygonal opening (30) of the cam disk (3), through which a polygonal axle (9) connected with the actuating lever is put.

## Revendications

1. Dispositif pour régler et bloquer le dossier d'un siège de véhicule comprenant
- une première couronne de train planétaire (1) reliée au châssis du siège de véhicule,
- une deuxième couronne de train planétaire (2) reliée au dossier du siège de véhicule et munie d'une denture intérieure (21),
- au moins un élément de blocage (6, 7) disposé de manière radialement mobile au niveau de la première couronne de train planétaire (1) et muni d'une denture extérieure (61, 71, 72) recouvrant au moins en partie la denture intérieure (21) de la deuxième couronne de train planétaire (2) et
- un dispositif (3) pour commander le déplacement radial de l'élément de blocage (6, 7) qui, dans une position bloquant le dossier, s'engage avec sa denture extérieure (61, 71, 72) dans la denture intérieure (21) de la deuxième couronne de train planétaire (2) et sa denture extérieure (61, 71, 72) est dégagée, dans une position pour régler le dossier, de la denture intérieure (21) de la deuxième couronne de train planétaire (2) **caractérisé en ce que**
- la première couronne de train planétaire (1) présente également une denture intérieure (11),
- la denture extérieure (61, 71, 72) de l'élément de blocage (6, 7) recouvre également au moins en partie la denture intérieure (11) de la première couronne de train planétaire (1) et
- l'élément de blocage (6, 7), dans une position bloquant le dossier, s'engage également avec sa denture extérieure (61, 71, 72) dans la denture intérieure (11) de la première couronne de train planétaire (1) et sa denture extérieure (61, 71, 72) est également dégagée, dans une position pour régler le dossier, de la denture intérieure (11) de la première couronne de train planétaire (1).

2. Dispositif selon la revendication 1, **caractérisé en ce que** la denture extérieure (61) d'un élément de blocage entièrement denté (6) est réalisée sous forme de denture complète avec une largeur de dent qui recouvre essentiellement les dentures intérieures (11, 21) de la première et de la deuxième couronne de train planétaire (1, 2).

3. Dispositif selon la revendication 1, **caractérisé en ce que** la denture extérieure d'un élément de blocage partiellement denté (7) est divisée dans le sens périphérique en deux zones distantes l'une de l'autre, dans lesquelles une première denture partielle (71) est associée à la denture intérieure (11) de la première couronne de train planétaire (1) et une deuxième denture partielle (72) décalée axialement par rapport à la première denture partielle (71) est associée à la denture intérieure (21) de la deuxième couronne de train planétaire (2) et **en ce que** l'élément de blocage partiellement denté (7) peut basculer ou pivoter autour d'un axe situé entre les deux zones de denture partielle (71, 72).

4. Dispositif selon au moins l'une quelconque des revendications précédentes, **caractérisé par** au moins deux éléments de blocage (6, 7) disposés de façon décalée l'un par rapport à l'autre dans le sens périphérique des dentures intérieures (11, 21) des couronnes de train planétaire (1, 2) et munis de dentures extérieures (61, 71, 72) réalisées de manière coïncidente sous forme de denture complète ou de denture partielle.

5. Dispositif selon au moins l'une quelconque des revendications précédentes 1 à 3, **caractérisé par** au moins deux éléments de blocage (6, 7) disposés dans le sens périphérique des dentures intérieures (11, 21) des couronnes de train planétaire (1, 2) et munis de différentes dentures extérieures (61, 71, 72) réalisées sous forme de dentures complètes et partielles.

6. Dispositif selon la revendication 5, **caractérisé par** un premier élément de blocage (6) avec une denture extérieure entièrement dentée (61) et un deuxième élément de blocage (7) décalé de 180° par rapport au premier élément de blocage (6) dans le sens périphérique des dentures intérieures (11, 21) des couronnes de train planétaire (1, 2) et muni d'une denture extérieure partiellement dentée (71, 72).

7. Dispositif selon la revendication 5, **caractérisé par** un premier et un deuxième élément de blocage (6) avec une denture extérieure entièrement dentée (61) et un troisième élément de blocage (7) avec une denture extérieure partiellement dentée (71, 72) qui sont décalés de 120° l'un par rapport à l'autre dans le sens périphérique des dentures intérieures (11, 21) des couronnes de train planétaire (1, 2).

8. Dispositif selon la revendication 5, **caractérisé par** deux éléments de blocage (6) avec une denture extérieure entièrement dentée (61) et deux éléments de blocage (7) avec une denture extérieure partiellement dentée (71, 72) qui sont décalés de 90° l'un par rapport à l'autre dans le sens périphérique des dentures intérieures (11, 21) des couronnes de train planétaire (1, 2), dans lequel les éléments de blocage (6 ou 7) avec la même denture extérieure (61, 71, 72) sont disposés de manière adjacente.

9. Dispositif selon au moins l'une quelconque des revendications précédentes, **caractérisé en ce que** l'élément de blocage est réalisé sous forme de coulisseau qui est guidé radialement dans un élément de guidage (4, 5) relié à la première couronne de train planétaire (1), qui présente des épaulements de basculement (50) autour desquels un élément de blocage (7) avec denture extérieure partiellement dentée (71, 72) peut basculer ou pivoter et s'appuie avec des surfaces de glissement bombées (73, 74) contre l'élément de guidage (4, 5) pour le basculement ou le pivotement.

10. Dispositif selon au moins l'une quelconque des revendications précédentes 1 à 8, **caractérisé en ce que** l'élément de blocage (6, 7) est disposé de manière pivotante autour d'une articulation au niveau de la première couronne de train planétaire (1).

11. Dispositif selon au moins l'une quelconque des revendications précédentes, **caractérisé en ce que** le dispositif pour commander le déplacement radial de l'élément de blocage (6, 7) se compose d'un disque à cames (3) qui est précontraint dans le sens de verrouillage de l'élément de blocage (6, 7) de telle sorte qu'une came (31, 32, 33) associée à l'élément de blocage (6, 7) déplace radialement l'élément de blocage (6, 7) de telle sorte que la denture extérieure (61, 71, 72) de l'élément de blocage (6, 7) s'engage dans les dentures intérieures (11, 21) des couronnes de train planétaire (1, 2).

12. Dispositif selon au moins l'une quelconque des revendications précédentes, **caractérisé en ce que** le disque à cames (3) peut tourner autour d'un axe au moyen d'un levier d'actionnement et **en ce que** lors du basculement du levier d'actionnement de la position bloquant le dossier, dans laquelle la denture extérieure (61, 71, 72) de l'élément de blocage (6, 7) s'engage dans les dentures intérieures (11, 21) de la première et de la deuxième couronne de train planétaire (1, 2), dans l'une ou l'autre direction un dispositif de rappel (65, 75 ; 34, 35, 36) relié au disque à cames (3) déplace radialement l'élément de blocage (6, 7) de telle sorte que la denture extérieure (61, 71, 72) est dégagée, dans la position pour régler le dossier, des dentures intérieures (11, 21) de la première et de la deuxième couronne de train planétaire (1, 2).

13. Dispositif selon la revendication 12, **caractérisé en ce que** l'élément de blocage (6, 7) contient une coulisse de rappel (65, 75), dans laquelle s'engage un poussoir de came (34, 35, 36) relié au disque à cames (3), qui, lorsque la denture extérieure (61, 71, 72) de l'élément de blocage (6, 7) s'engage dans les dentures intérieures (11, 21) des couronnes de train planétaire (1, 2), est disposé dans un évidement (651, 751) de la coulisse de rappel (65, 75) situé plus près du milieu des couronnes de train planétaire (1, 2), alors que, pour dégager la denture extérieure (61, 71, 72) de l'élément de blocage (6, 7) des dentures intérieures (11, 21) des couronnes de train planétaire (1, 2), il s'appuie contre deux épaulements (652, 752) de la coulisse de rappel (65, 75) disposés sur le côté de l'évidement (651, 751).

14. Dispositif selon au moins l'une quelconque des revendications précédentes, **caractérisé en ce que** la denture intérieure (11) de la première couronne de train planétaire (1) se compose d'une section de denture intérieure qui est réalisée au niveau de la section périphérique de la première couronne de train planétaire (1) s'alignant avec la denture extérieure (61, 71, 72) de l'élément de blocage (6, 7).

15. Dispositif selon au moins l'une quelconque des revendications précédentes, **caractérisé par** une disposition concentrique avec logement flottant des couronnes de train planétaire (1, 2) dans le cas d'une disposition d'au moins un élément de blocage (6) avec denture extérieure entièrement dentée (61).

16. Dispositif selon au moins l'une quelconque des revendications précédentes 1 à 12, **caractérisé par** une disposition concentrique avec logement non flottant des couronnes de train planétaire (1, 2) dans le cas d'une disposition exclusive d'éléments de blocage (7) avec denture extérieure partiellement dentée (71, 72).

17. Dispositif selon au moins l'une quelconque des revendications précédentes, **caractérisé par** des orifices de logement (14, 24) centraux alignés les uns avec les autres des couronnes de train planétaire (1, 2) et un orifice polyédrique (30) du disque à cames (3) par lequel est enfiché l'axe polyédrique (9) relié au levier d'actionnement.
